(19) Europäisches Patentamt
European Patent Office
Office européen des brevets

(11) Publication number: **0 528 258 A2**

# (12) EUROPEAN PATENT APPLICATION

(21) Application number: **92113275.9**

(51) Int. Cl.5: **G06F 15/72**

(22) Date of filing: **04.08.92**

(30) Priority: **08.08.91 JP 224594/91**

(43) Date of publication of application: **24.02.93 Bulletin 93/08**

(84) Designated Contracting States: **DE FR GB NL**

(71) Applicant: **ROHM CO., LTD.**
**21, Saiin Mizosaki-cho Ukyo-ku**
**Kyoto(JP)**

(72) Inventor: **Tsutsumi, Kunihiro, c/o Rohm Co. Ltd.**
**21, Saiin Mizosaki-cho, Ukyo-ku**
**Kyoto(JP)**
Inventor: **Akagawa, Masataka, c/o Rohm Co. Ltd.**
**21, Saiin Mizosaki-cho, Ukyo-ku**
**Kyoto(JP)**
Inventor: **Hamada, Koshiro**
**Furatto, Kanumadai 4F, 2-12-20, Kanumadai**
**Sagamihara-shi, Kanagawa-ken(JP)**

(74) Representative: **Strehl, Schübel-Hopf, Groening**
**Maximilianstrasse 54 Postfach 22 14 55**
**W-8000 München 22 (DE)**

## (54) Picture storage circuit and image processing apparatus using the same.

(57) A picture storage circuit having a memory (2) for storing picture data (PD), and a counter (4) for counting clock signals (CLK) on receiving a so-called dot clock signal as a clock signal having a period corresponding to horizontal scanning time of each dot on the picture displayed on a display and for designating an address in the memory (2) according to the count. The counter (4) is reset on a vertical synchronizing signal (VD). Picture data (PD) equivalent to one field displayed on the display are sequentially stored in the memory (2). The picture data (PD) equivalent to the one field thus stored are sequentially read out in response to the clock signal (CLK).

FIG.1

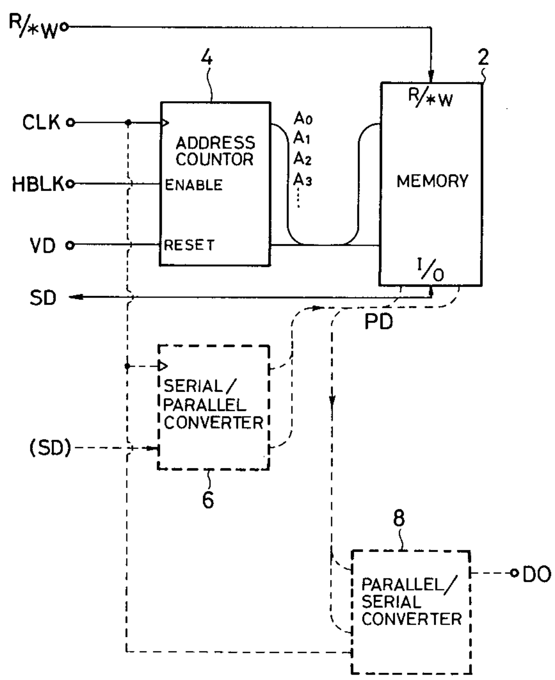


EP 0 528 258 A2

## BACKGROUND OF THE INVENTION

### Technical Field

The present invention relates generally to picture storage circuits and image processing apparatus using such circuits, and more particularly to improvements in a title memory in an image processing apparatus such as a video incorporating a camera (hereinafter called "video camera") capable of combining a title picture with a general image, recording and regenerating the resulting combination.

### Background Art

Fig. 8 is a block diagram mainly illustrating a title control circuit in a video camera as a specific example of an image processing apparatus

There are two kinds of methods mainly used for combining a title picture 50 with a general picture 60 in a video camera 10. The first method comprises the steps of recording the picture 60 on a video tape by means of a recording circuit 70, regenerating the picture 60 by rewinding the video tape, taking a photograph of the title picture 50 while checking the picture 60 thus regenerated, and combining the picture 60 with the title picture 50. It is possible in this method to edit a proper title picture by superimposing the picture at any given timing after checking the contents photographed and recorded. However, apparatus adapted for use in this method are intended for enthusiasts only because of high manufacturing cost.

The second method comprises the steps of taking a photograph of a title picture 50 first, digitizing the picture in the form of a still picture, storing the still picture once in a memory 20 formed of SRAM and the like, reading the title picture stored in the memory 20 under the instruction of a photographer while taking a photograph of a picture 60, and superimposing the title picture on the picture 60 to record the combination.

Although this method is inferior in editing freedom, it is increasingly used in apparatus intended for general users as it is cost-saving. For this reason, a video camera employing the second method is specifically introduced in the following description.

This video camera 10 comprises, for instance, a title control circuit 40, a microprocessor (MPU) 30 for monitoring and controlling the whole video camera, the microprocessor being positioned on one side of the circuit 40, a memory 20 for storing title pictures 50, and a recording circuit 70 for combining the picture 60 with the title picture 50 and recording the combination on a video tape.

Referring to the block diagram of Fig. 8, a description will first be given of the operation of storing the title picture in the memory 20.

An imaging device (not shown) of the video camera 10 is used to take a photograph of the title picture 50, which is converted into digital data in the form of a title input signal I, and this signal is supplied to a title control circuit 40. The title control circuit 40 forms an address signal AD and a data signal DT from the title input signal I on receiving a signal CC from the microprocessor 30 in conformity with the instruction given by the operator, controls the memory 20 in response to a memory control signal MC, and makes the memory 20 store the title picture 50. The title picture 50 is stored in the memory in this way, whereby a title can optionally be combined with a photographic image at any time.

Subsequently, the operation of superimposing the title picture 50 while the picture 60 is being taken.

When a signal (not shown) for giving data on the picture 60 is sent to the recording circuit 70 before being recorded on the video tape, the microprocessor 30 reacts to the title insertion switch pressed by the photographer and outputs a title picture reading instruction in the form of the signal CC. On receiving the instruction, the title control circuit 40 forms the address signal AD in synchronization with the signal for giving the data on the picture 60 and controls the memory 20 according to the memory control signal MC. The title control circuit 40 further reads the data on the title picture 50 stored in the memory 20 therefrom in the form of the data signal DT and sends to the recording circuit 70 a title output signal TT restored and formed from the data. On receiving the signal TT, the recording circuit 70 combines the signal G with that of the picture 60 and records the combination on the video tape.

Incidentally, the title control circuit 40 and the memory 20 are normally treated as an integral picture storage circuit.

Fig. 5 illustrates the principal part of the picture storage circuit, wherein a memory 2 represents the aforementioned memory 20.

The memory 2 receives picture data reading/writing addresses from a horizontal address counter 41 and a vertical address counter 42 which form a part of the title control circuit 40. In this case, a reference character CLK denotes a dot clock signal. The dot clock signal has a period corresponding to horizontal scanning time of each dot on the picture displayed on a display. The dot clock signal CLK is supplied to the horizontal address counter 41, whereas a horizontal synchronising signal HD is applied to the vertical address counter 42. Moreover, a horizontal synchronizing signal HD is applied to the reset input (RESET) of the horizontal address counter 41, whereas a vertical synchronizing signal VD is applied to the reset input (RESET) of the vertical address counter 42.

In that case, a reference character R/*W denotes the read/write control terminal of the memory 2 and the terminal receives a control signal R/*W. When picture data is stored, this signal sets the memory 2 in a write state, whereas when it is read, this signal sets the memory 2 in a read state.

Fig. 6 is a timing chart indicating the operation of the picture storage circuit, wherein a reference character (A) denotes the dot clock signal CLK, (B) the vertical synchronizing signal VD, (C) the horizontal synchronizing signal, (D) respective signals A0, A1... (each digit signal) on a horizontal address line, (E) an initial signal (a first digit signal) V0 on a vertical address line, t1, t2 points of reset time at the respective horizontal addresses, t3 a point of reset time at the vertical address, "H" a HIGH level, and "L" a LOW level.

As is obvious from the configuration of Fig. 5 and the timing chart of Fig. 6, the horizontal address counter 41 counts the dot clock signals CLK and makes the count a horizontal address Ah in the memory 2. The horizontal synchronizing signal HD caused the count to be reset. Further, the vertical address counter 42 counts horizontal scanning lines and makes the count a vertical address Av in the memory. The vertical synchronizing signal caused the count of the vertical address counter 42 to be reset. In this way, the horizontal and vertical addresses are designated by the counts of the dot clock signals and the horizontal scanning lines. The picture data on the titles are dot-to-dot stored at the respective addresses.

In this kind of picture storage circuit, there are provided the horizontal and vertical address counters 41, 42 as means of designating addresses in the memory 2 so that addresses in the horizontal and vertical directions are designated by different counters. For this reason, the number of horizontal and vertical samplings is limited to the $n^{th}$ power of 2 corresponding to the number of digits of the counters for keeping digital counts.

Fig. 7 illustrates a picture plane to be stored in the picture storage circuit, wherein H represents a horizontal direction, V a vertical direction, Nn the number of horizontal scanning lines in the NTSC system, normally about 243 lines, and Np the number of horizontal scanning lines in the PAL system, normally about 280 lines. The measure indicate one dot. As shown in Fig. 7, the number of horizontal scanning lines in the PAL system is greater than that of horizontal scanning lines in the NTSC system and the number of vertical samplings in the former increases by the difference therebetween. In other words, the number of vertical samplings exceeds the count 256 of an 8-bit counter in the PAL system; consequently, the number of digits of the counter increases by one and the number of vertical address lines also increases by one as compared with the NTSC system. Therefore, the storage capacity of the memory 2 for storing pictures increases. When a memory 2 having a storage capacity of 64K bits for the NTSC system is directly used for the PAL system, the storage picture becomes partly deleted because the storage capacity in the PAL system is insufficient. In order to prevent the deletion, it will be necessary to install a storage capacity fit for a corresponding broadcasting system and a storage means having a storage capacity corresponding to the PAL system. The provision of such a storage capacity or a storage means may cause an increase in design and manufacturing costs.

## SUMMARY OF THE INVENTION

An object of the present invention is to provide a picture storage circuit designed to restrain an increase in the number of wires due to an increase in the number of horizontal scanning lines.

Another object of the present invention is to provide a picture storage circuit designed to prevent a storage picture from being partly deleted due to an insufficient storage capacity.

Still another object of the present invention is to provide an image processing apparatus designed to prevent a storage picture from being partly deleted due to an insufficient storage capacity.

The present invention is characterized by a memory for storing picture data, and a counter for counting clock signals on receiving a so-called dot clock signal having a period corresponding to horizontal scanning time of each dot on the picture displayed on a display and for designating an address in the memory according to the count, the counter being reset on a vertical synchronizing signal, wherein picture data equivalent to one field displayed on the display are sequentially stored in the memory and wherein the picture data equivalent to one field are sequentially read out upon the clock signal.

With this arrangement, it is possible to check if the number of dots displayed on the display corresponds to the storage capacity of the memory and if the number of dots displayed thereon is smaller than the storage capacity thereof, to store the picture data equivalent to one field in the memory. Consequently, the number of horizontal scanning lines and that of horizontal dots can freely be selected in the one field within the range of storage capacity of the memory. Therefore, picture data equivalent to one field can be stored even though a standard television system and the number of horizontal scanning lines are different.

Since the period (frequency) of the dot clock signal is usable to readily change the number of horizontal samplings, the number of samplings is readily changeable in accordance with the number of horizontal scanning lines. The number of horizontal scanning lines can be increased by decreasing the number of horizontal sampling dots and this makes it possible to store the picture data equivalent to one field without increasing the storage capacity. As a result, the memory for use in the NTSC system may be used without replacing it with another memory having a larger capacity even in the PAL system and the like using horizontal scanning lines greater in number than those in the NTSC system. Unlike the prior art, the present invention has the effect of preventing a storage picture from being partly deleted. Moreover, the number of wires on the side of a vertical address counter, if any, is unnecessary to increase in this case.

## BRIEF DESCRIPTION OF THE DRAWINGS

Fig. 1 is a block diagram of a picture storage circuit embodying the present invention.

Fig. 2 is a timing chart illustrating the operation of the picture storage circuit of Fig. 1.

Fig. 3 is a diagram illustrating the formation of a picture by means of the picture storage circuit of Fig. 1.

Fig. 4 is a block diagram of another picture storage circuit embodying the present invention.

Fig. 5 is a block diagram of a conventional picture storage circuit.

Fig. 6 is a timing chart illustrating the operation of the picture storage circuit of Fig. 5.

Fig. 7 is a diagram illustrating the structure of a picture in the PAL and NTSC systems.

Fig. 8 is a diagram illustrating the basic configuration of a video camera with a title control circuit as a central figure.

## DESCRIPTION OF THE PREFERRED EMBODIMENTS

In a picture storage circuit of Fig. 1, there are installed a memory 2 as a storage means for storing picture data on titles and an address counter 4 which is a count means as an address designation means located on the address designation input side of the memory 2.

The address counter 4 is a single counter incorporating a horizontal and a vertical address counter which have conventionally been provided. A dot clock signal CLK is applied to the clock input terminal of the address counter 4, a horizontal blanking signal HBLK to the ENABLE terminal thereof, and a vertical synchronizing signal VD to the reset terminal thereof, so that the dot clock signals CLK are sequentially counted during the one field period of a picture. The count represents an access address of the memory 2. As a result, the memory 2 sequentially stores picture data with the one field period as a unit or picture data are read therefrom.

Picture data SD as what is to be stored is serially supplied to the input/output port (I/O) of the memory 2 when the memory is in a write condition and the picture data SD is serially read therefrom when the memory is in a read condition.

The portion indicated by a dotted line exemplifies a case where picture data is stored with one byte as a unit according to the present invention and this arrangement is normally recommended. When picture data is stored with one byte as a unit, the low order 3 bits of the address counter 4 are not used for an address signal of the memory 2. High order digits from an address line A3 are used for an address signal for gaining access to the memory 2. An embodiment in this case will subsequently be described.

A serial/parallel converter 6 as a first data conversion means for converting data to be stored is connected to the input/output port of the memory 2. The dot clock signal CLK together with the picture data SD as serial data is being applied to the serial/parallel converter 6 and the picture data as the serial data is converted to picture data PD as parallel data with an 8-dot clock signal as a unit in synchronization with the dot clock signal CLK in the serial/parallel converter 6. Therefore, the picture data PD as parallel data is stored at the address designated by the address counter 4 in the memory 2. In this case, the low order 3 bits of the counter 4 are made invalid for gaining access to the memory 2.

Since the picture data PD as parallel data is stored in the memory 2, the picture data PD read from the memory 2 naturally becomes parallel data when any data is read out. Consequently, a parallel/serial converter 8 as a second data conversion means is connected to the input/output unit of the memory 2 to regenerate the parallel data that has been read as serial data. The dot clock signal CLK together with the picture data PD as parallel data read from the memory 2 with the address designated by the address counter 4 is being applied to the parallel/serial converter 8. Consequently, the picture data PD as parallel data read from the memory 2 with a 8-dot clock signal as a unit in synchronization with the dot clock signal CLK and converted by the parallel/serial converter 8 to serial data with a dot clock signal as a unit and further the serial data is output as a read output DO.

In the former embodiment as well as the latter embodiment in which storage is effected on a byte basis, the capacity M of the memory 2 in each of the picture storage circuits is so selected as to satisfy

$$Hs \times Vs \leqq M \quad (1)$$

where M: the storage capacity of the memory 2, Hs: the number of horizontal samplings, and Vs: the number of vertical samplings. If these conditions are met, the same memory may be used in the aforementioned circuit even though Hs, Vs differ as in the PAL and NTSC systems, for instance.

Referring to Fig. 2, the operation will subsequently be described.

Fig. 2(A) shows the dot clock signal CLK, which is the count unit of the address counter 4. In the case of the latter embodiment, the dot clock signal CLK provides the basis for synchronizing timing at which the data is converted by the serial/parallel converter 6 and the parallel/serial converter 8.

The dot clock signal CLK as a clock input, the vertical synchronizing signal VD of Fig. 2(B) as a reset input, and the horizontal blanking signal HBLK ("L" has meaning) of Fig. 2(C) as an enable input are applied to the address counter 4. The address counter 4 sequentially counts the dot clock signals CLK through one field and as shown in Fig. 2(D), data (each digit data) A0, A1, A2... on the address line of the memory 2 are obtained. Digits after A2 are used for an address signal in the latter embodiment.

As will be understood from this timing chart, the address counter 4 counts the dot clock signals CLK during the period between the vertical synchronizing signal VD and the following vertical synchronizing signal VD and the count is used for addresses (each digit value = A0, A1, A2, A3...) and the count changes to 0, 1, 2, 3..., m + 1, m + 2, m + 3, m + 4... Signal levels of A0, A1, A2, A3... vary with the value above to "H", "L" as shown in Fig. 2.

As "H" of the horizontal blanking signal HBLK is used as the enable signal, the counter 4 operates only during the period "H" of this signal. Therefore, the count of the counter 4 indicating the last dot position of horizontal scanning during the period "L" of the horizontal blanking signal HBLK is held. The count "m + 1" on the first line is not incremented during the period of the horizontal blanking even though the dot clock signal CLK is received. Consequently, the picture data over the whole picture plane are stored at a series of addresses. In other words, picture data corresponding to the length of the horizontal scanning line are stored and picture data existing in one field are continuously stored to the extent of the number of horizontal scanning lines. As a result, the data stored in the memory 2 are dependent on the product of the number of horizontal samplings and that of horizontal samplings within one field but not dependent on each numerical value.

It is therefore only necessary to provide a memory having a storage capacity of dots in one field if the memory is intended for use in both the NTSC and PAL systems and it becomes a title memory capable of storing picture data in both systems. More specifically, the storage capacity of the memory 2 should be determined as follows:

In the NTSC system: $Hns \times Vns \leqq M$
where Hns: the number of horizontal samplings, and Vns: the number of horizontal samplings.

In the PAL system: $Hps \times Vps \leqq M$
where Hps: the number of horizontal samplings, and Vps: the number of horizontal samplings.

If horizontal and vertical samplings are continuous like this, the number of horizontal samplings and that of vertical samplings are not restricted to the $n^{th}$ power of 2 and the number of samplings changes in accordance with the number of horizontal scanning lines.

Fig. 3 shows a picture display area corresponding to the memory 2, wherein a0...aE indicate addresses on the picture plane. In Fig. 3, a reference character HD denotes a horizontal synchronizing signal, HBLK the horizontal blanking signal, and VD the vertical synchronizing signal. The interrelation between Figs. 2 and 3 may be shown as follows. Address values 1, 2, 3..., m + 1, m + 2, m + 3, m + 4... determined by data A0, A1, A2, A3... on the address line relate to addresses a0,..aE on the picture plane shown in Fig. 3 as shown at the lowest stage of Fig. 2. This relationship is applicable likewise to a case where the picture data PD is read from the memory 2 as serial data. It has no special meaning not to allocate the display dot to the address "0" or otherwise the address "0" may be made to correspond to a0.

Since the operation in the former embodiment is substantially similar to that in the latter embodiment in which storage is effected on a byte basis, the latter case will be described.

With respect to the overall operation of the picture storage circuit, a read/write control signal R/*W is first set to a write condition and the picture data SD as serial data to be stored is applied to the serial/parallel converter 6 in synchronization with the dot clock signal CLK. The picture data SD is converted to the picture data PD as parallel data through the serial/parallel converter 6 and the data thus converted is accessed and stored in the memory 2 as designated by the address obtain from counting the dot clock signals CLK sequentially every period of one field on the part of the address counter 4.

When the data PD is read from the memory 2, the read/write control signal R/*W is first set to a read condition and then the memory 2 is accessed as designated by the address obtain from counting the dot clock signals CLK sequentially every period of one field on the part of the address counter 4. The picture data PD as parallel data read from the memory 2 is converted by the parallel/serial converter 8 to serial data in synchronization of the dot clock signal CLK and taken out as the read output DO. The output data is sent to the recording circuit 70 as the title output signal of Fig. 8.

Fig. 4 shows an embodiment in which the number of horizontal samplings is varied by changing the period of the dot clock signal CLK. With this arrangement, even if the storage capacity M of the memory 2 is made to correspond to the NTSC system, for instance, it is possible to store picture data in another system, the PAL system, for instance, without changing the memory 2.

In this embodiment, the memory 2 is what has the serial input/output port and when it is caused to store data on a byte basis by means of the serial/parallel converter 6 and the parallel/serial converter 8, these may be added thereto likewise. When the PAL system is selected, moreover, the conventional horizontal and vertical address counters 41, 42 in place of the address counter 4 are connected to the memory 2 and the operation is switched to one counter. Consequently, this circuit and what is shown in Fig. 1 are similar to each other in the case of the PAL system.

A PAL/NTSC dot clock signal generating circuit 9 generates a dot clock signal CLK corresponding to each of the PAL and NTSC systems in responding to a PAL/NTSC switching signal (PAL/NTSC) for instructing the switching of the PAL system to the NTSC system and vice versa. In this case, the memory 2 has a storage capacity of 64K bits and this means it is to be designed to correspond to the NTSC system.

The provision of the PAL/NTSC dot clock signal generating circuit 9 for generating a clock signal whose frequency corresponds to each system makes it possible to alter the number of horizontal samplings in conformity with the system involved. Therefore, a circuit commonly usable in both the PAL and NTSC systems can be attained. Moreover, an increase in counter wiring is unnecessary.

On the other hand, the connection between the horizontal and vertical address counters 41, 42 is made by causing switch circuits 9a, 9b, 9c to apply the carry signal of the horizontal address count 41 to the enable terminal of the vertical address counter 41 in synchronization with the dot clock signal CLK when the PAL/NTSC switching signal designates PAL and by counting the signals.

When the capacity of the memory 2 is determined in conformity with the number of horizontal scanning lines in the PAL system, the number of horizontal samplings may be increased further in the NTSC system.

Although the principle of the present invention has been given above, a memory size of 64K actually means a memory size of 65,536 bits and it is still advantageous to set the count in digital processing at multiples of 2 and 8. When multiples of 2 and 8 which approximately amount to 243 are used, the number of horizontal scanning lines comes to 256. Therefore, the number of horizontal samplings in the case of the NTSC system comes to $65{,}536 \div 256 = 256$. As will readily be understood from the description above, the dot clock signal generating frequency of the PAL/NTSC dot clock generating circuit 9 in the NTSC system comes to $50\ \mu sec \div 256 \risingdotseq 0.195\ \mu sec \risingdotseq 5$ MHz if effective picture scanning time is set to 50 $\mu$sec, excluding horizontal flyback time as no sampling is made during flyback time.

In the PAL system, on the other hand, one field has 312.5 lines as there are 625 horizontal scanning lines per picture plane. When a 64K bit memory is used, the number of vertical samplings actually comes to about 280 in consideration of flyback time. The number of horizontal samplings is $65{,}536 \div 280 \risingdotseq 234$. If the number of horizontal samplings is set to 224 with some allowance (multiples of 2 and 8 are advantageous in view of digital processing) while the PAL/NTSC switching signal is designating PAL, the frequency of the clock signal generated by the PAL/NTSC dot clock signal generating circuit 9 comes to $50\ \mu sec \div 224 \risingdotseq 0.223\ \mu sec \risingdotseq 4.45$ MHz.

Consequently, the switching of the frequency of the PAL/NTSC dot clock signal generating circuit 9 is actually set as the switching of 4.45 MHz to and from 5 MHz.

The dot clock signal generated by the PAL/NTSC dot clock signal generating circuit 9 becomes the sampling frequency of A/D conversion with respect to the image signal and the result of the A/D conversion is naturally obtained as the serial picture data SD.

Obviously, unlike the conventional picture storage circuit formed with two counters, namely, the horizontal and vertical address counters, the number of wires is not increased even if the number of horizontal scanning lines is increased since the number of horizontal and vertical sampling dots is not restricted to the $n^{th}$ power of 2 when the address is designated by means of the count through the steps of employing the single counter and sequentially counting the dot clock signals CLK during the period of one field. Moreover, the freedom of setting the number of sampling dots increases and a given number of sampling dots can be set by varying the frequency of the dot clock signal CLK so that the storage capacity of the memory 2 is prevented from deficiency.

Therefore, the memory having a storage capacity of 64K bits, for instance, is employed in this picture storage circuit and the address count system using one address counter satisfying the relation defined by Eq. (1) is adopted, whereby not only the storage but also the regeneration of binary pictures, to say nothing of the storage of pictures in the NTSC system, can be achieved even in the PAL system having more horizontal scanning lines without causing the partial deletion of the storage picture due to the insufficiency of the storage capacity.

## Claims

**1.** A picture storage circuit comprising a memory (2) for storing picture data (PD), and a counter (4) for counting clock signals (CLK) on receiving a clock signal having a period corresponding to horizontal scanning time of each dot on the picture displayed on a display and for designating an address in said memory according to the count, said counter being reset on a vertical synchronizing signal (VD), wherein picture data equivalent to one field displayed on said display are sequentially stored in said memory.

**2.** The circuit of claim 1, wherein picture data equivalent to one field displayed on said display are sequentially stored in said memory (2) according to said clock signal (CLK) and wherein said picture data equivalent to one field are sequentially read out upon said clock signal according to said clock signal.

**3.** The circuit of claim 2, wherein said clock signal (CLK) is a dot clock signal and wherein on receiving a horizontal blanking signal (HBLK) is enabled during a period, excluding flyback time.

**4.** The circuit of claim 3, further comprising a serial/parallel converter circuit (6) for outputting parallel input data (PD) converted from serial input data (SD) on receiving said clock signal (CLK), and a parallel/serial converter circuit (8) for outputting serial output data (DO) converted from parallel output data (PD) on receiving said clock signal (CLK), wherein a plurality of low order digits of said counter (4) are not used for a signal for gaining access to said memory (2), wherein said picture data is serial data, wherein when data is written to said memory, said serial/parallel converter circuit (6) receives said picture data and sends parallel data to said memory and wherein when data is read from said memory, said parallel/serial converter (8) circuit outputs serial data converted from the parallel data read from said memory.

**5.** The circuit of claim 4, wherein said plurality of flow order digits are three digits and wherein data are stored in said memory (2) on a byte basis.

**6.** The circuit of claim 2, further comprising a clock signal generating circuit (9) for delivering said clock signal (CLK) and wherein said clock signal generating circuit generates clock signals of different frequencies in accordance with a plurality of standard television broadcasting systems.

**7.** The circuit of claim 6, wherein said clock signal generating circuit (9) generates a clock signal (CLK) of first frequency, wherein the capacity of said memory (2) is determined by said first clock signal to the extent that said picture data (PD) equivalent to one field in a system from among said plurality of standard television broadcasting systems, wherein said clock signal generating circuit generates a clock signal of second frequency so that when another standard television broadcasting system is selected, picture data equivalent to the one field are stored within the range or said storage capacity.

**8.** The circuit of claim 7, wherein said picture data (PD) is title data in a video camera and wherein said memory (2) is what stores said title data.

**9.** An image processing apparatus comprising a memory (2) for storing picture data (PD), and a counter (4) for counting clock signals (CLK) on receiving a clock signal having a period corresponding to horizontal scanning time of each dot on the picture displayed on a display and for designating an address in said memory according to the count, said counter being reset on a vertical synchronizing signal (VD), wherein picture data equivalent to one field displayed on said display are sequentially stored in said memory.

**10.** The apparatus of claim 9, said apparatus being a video camera.

FIG.1

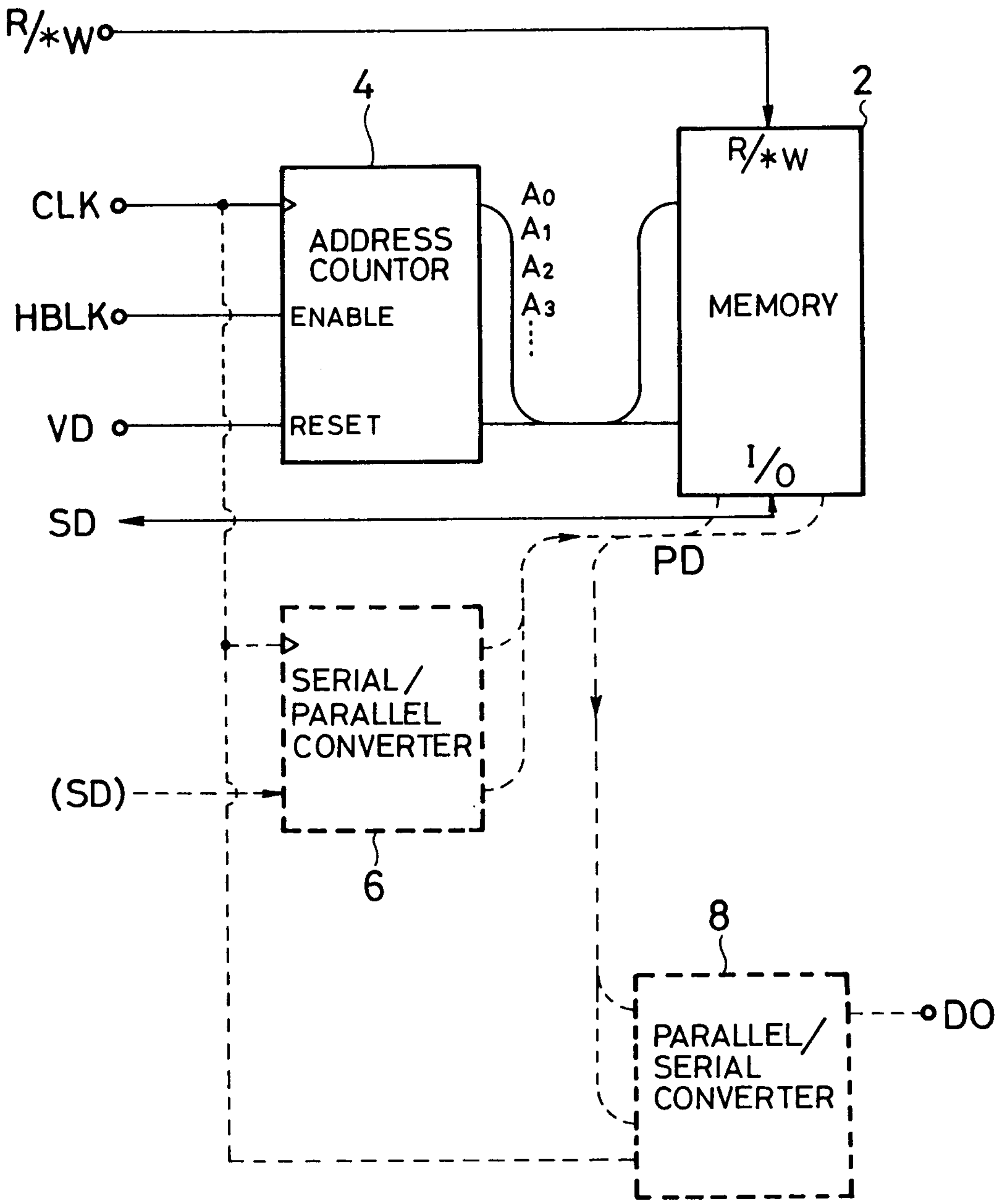
R/*W
4
2
CLK
ADDRESS COUNTOR
HBLK
ENABLE
VD
RESET
A0
A1
A2
A3
MEMORY
R/*W
I/O
SD
PD
SERIAL/ PARALLEL CONVERTER
(SD)
6
8
PARALLEL/ SERIAL CONVERTER
DO

FIG. 2

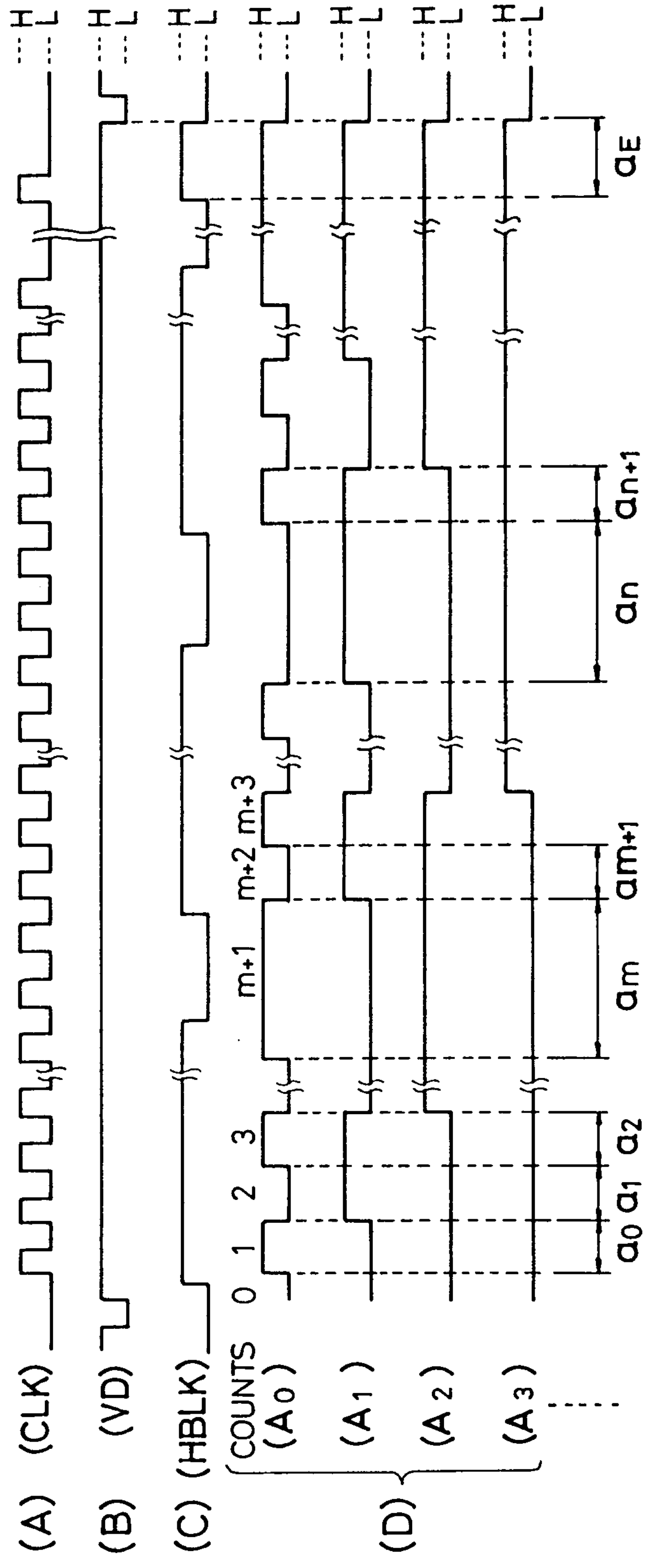
(A) (CLK)
(B) (VD)
(C) (HBLK)
(D) COUNTS
(A0)
(A1)
(A2)
(A3)
H
L
0
1
2
3
m+1
m+2
m+3
a0
a1
a2
am
am+1
an
an+1
aE

FIG. 3

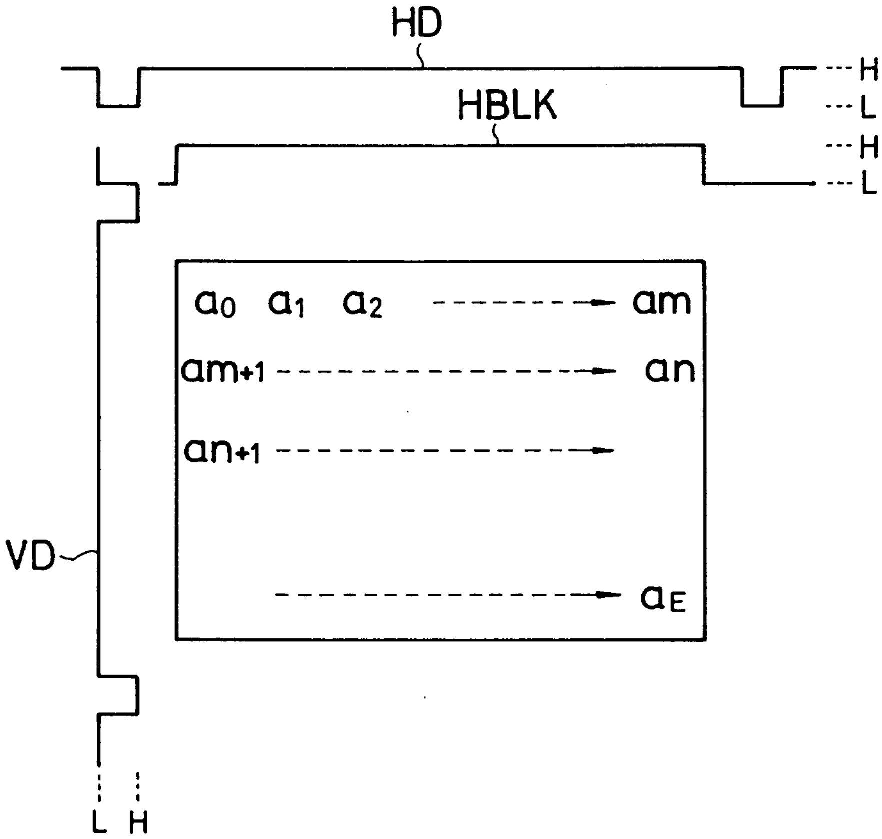

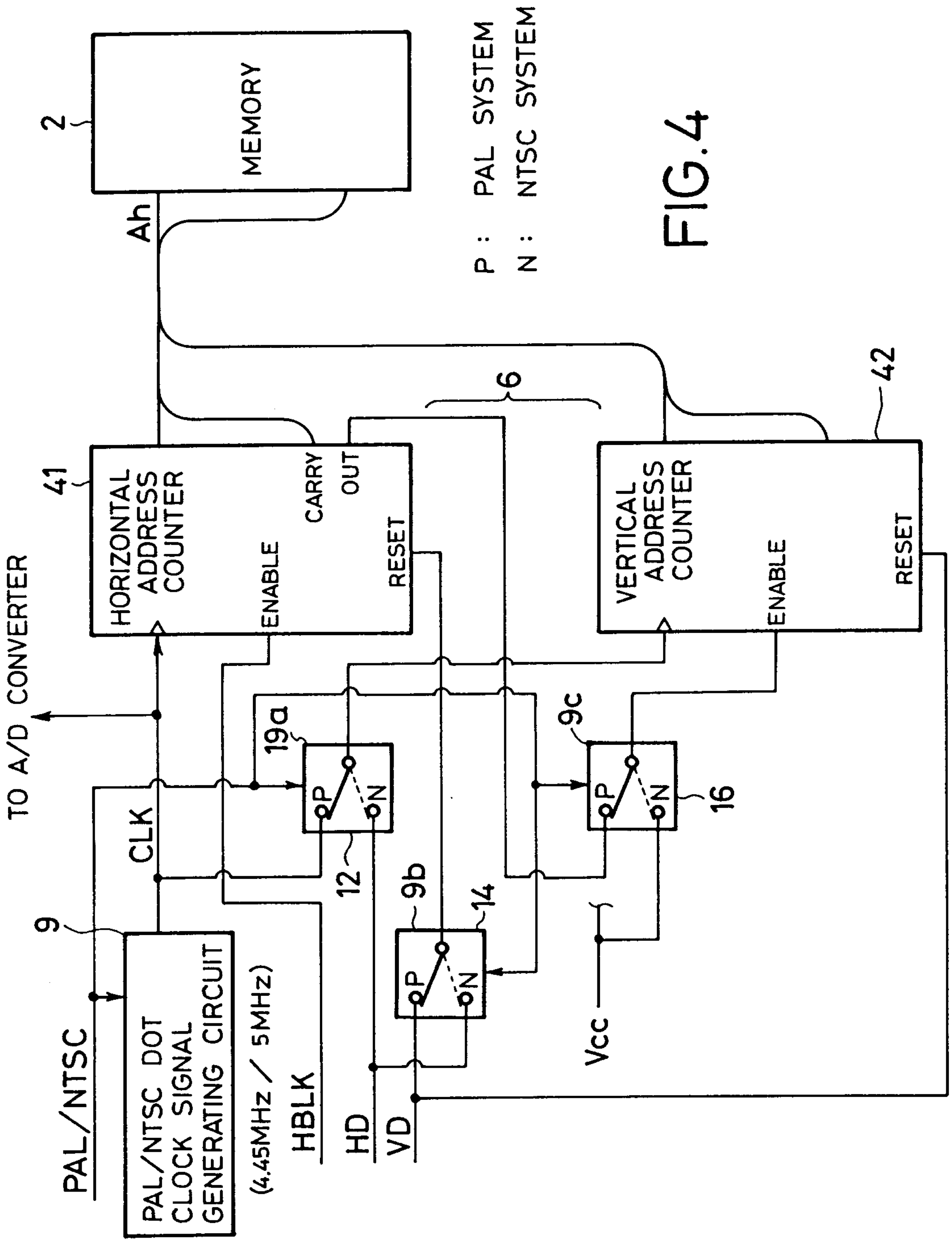
MEMORY
2
Ah
P : PAL SYSTEM
N : NTSC SYSTEM
HORIZONTAL ADDRESS COUNTER
41
ENABLE
CARRY OUT
RESET
6
VERTICAL ADDRESS COUNTER
42
ENABLE
RESET
TO A/D CONVERTER
CLK
19a
9c
P
N
12
16
9b
14
9
PAL/NTSC
PAL/NTSC DOT CLOCK SIGNAL GENERATING CIRCUIT
(4.45MHz / 5MHz)
HBLK
HD
VD
Vcc

FIG.4

FIG. 5

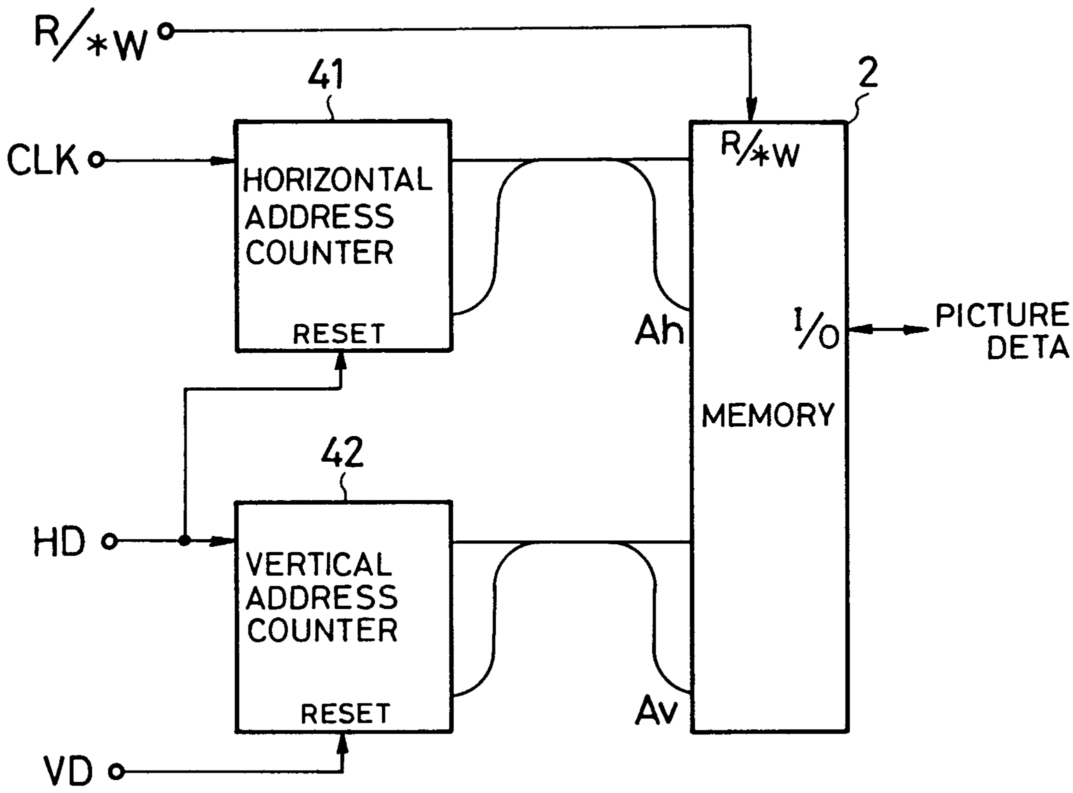
R/*W
41
2
CLK
HORIZONTAL ADDRESS COUNTER
RESET
R/*W
Ah
I/O
PICTURE DETA
MEMORY
42
HD
VERTICAL ADDRESS COUNTER
RESET
Av
VD

FIG.6

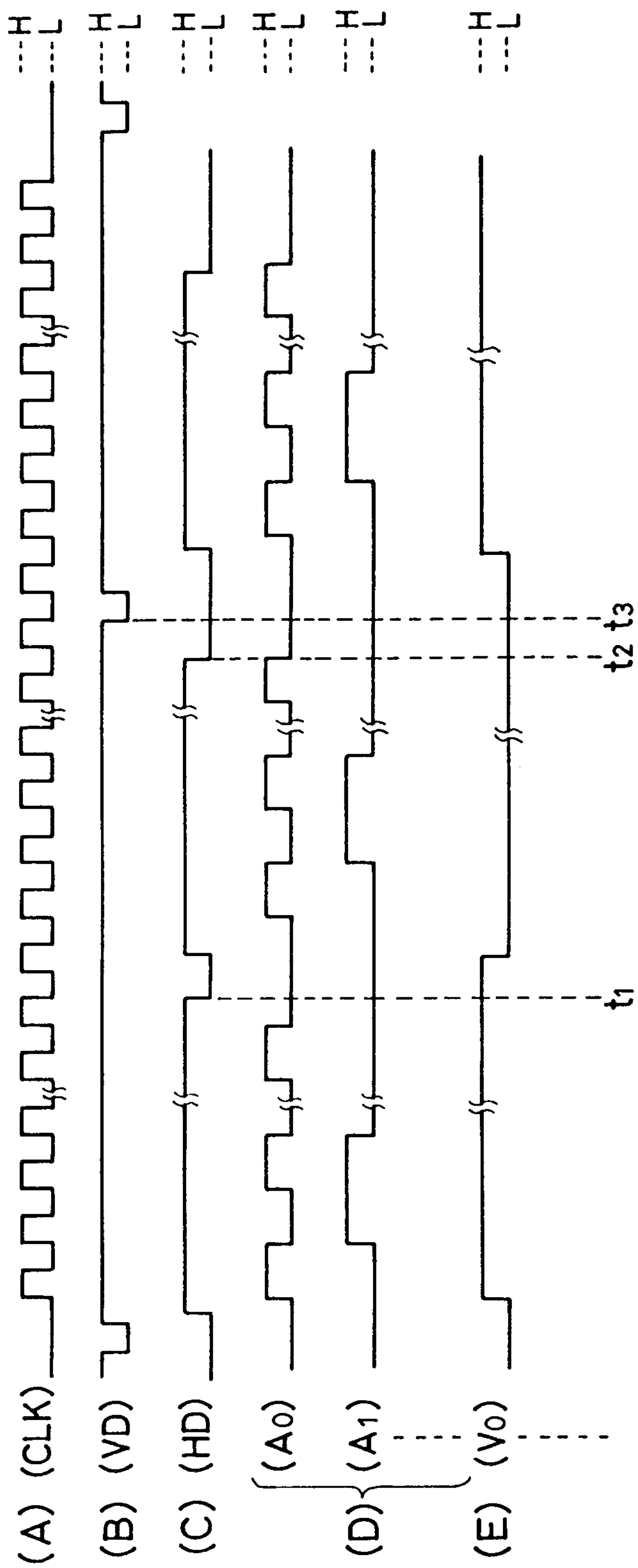

FIG.7

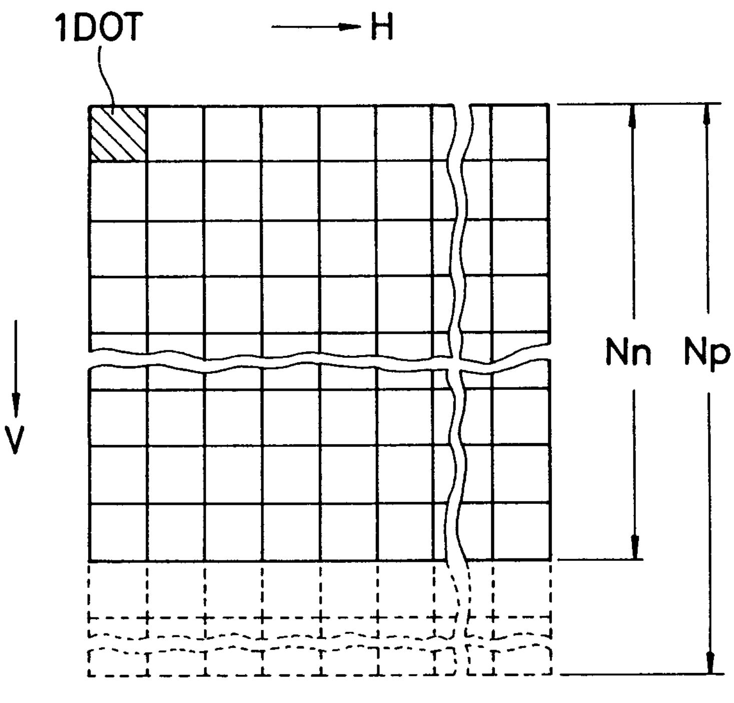

FIG. 8

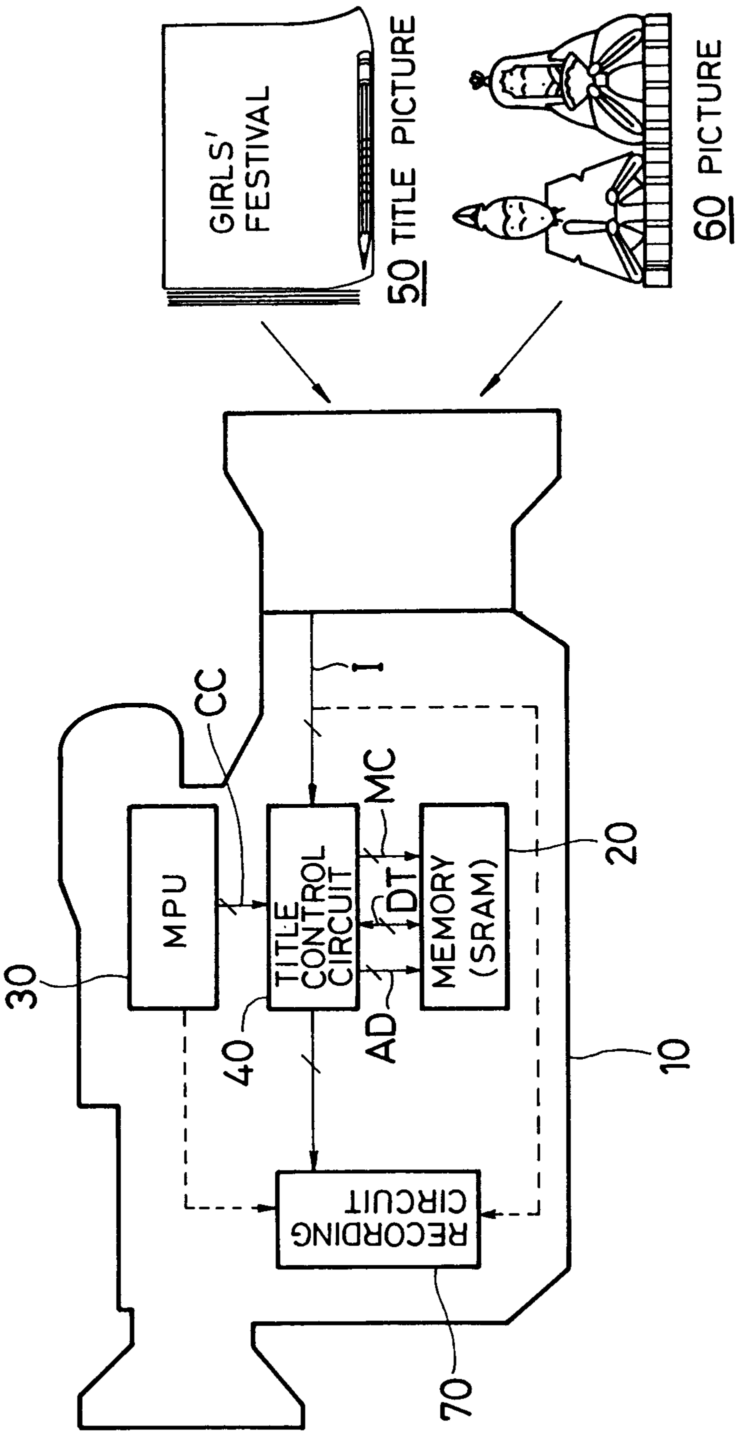
GIRLS' FESTIVAL
50 TITLE PICTURE
60 PICTURE
MPU
TITLE CONTROL CIRCUIT
MEMORY (SRAM)
RECORDING CIRCUIT
CC
MC
DT
AD
I
10
20
30
40
70